# EUROPÄISCHE PATENTSCHRIFT

(11) **EP 0 390 770 B1**
(45) Veröffentlichungstag und Bekanntmachung des Hinweises auf die Patenterteilung: **04.08.1993**
(21) Anmeldenummer: 90890081.4
(22) Anmeldetag: 21.03.1990
(51) Int. Cl.: G05B 19/21, G01D 3/02

(54) **Verfahren zur elektronischen Korrektur von Positionsfehlern bei einem inkrementalen Messsystem und Messsystem zur Durchführung des Verfahrens**
Method for the electronic correction of position error in an incremental measuring system and measuring system for implementation of the method
Méthode de correction électronique d'erreur de position pour un système de mesure incrémentiel et système de mesure pour mettre en oeuvre ce procédé

(30) Priorität: 29.03.1989 AT 716/89
(43) Veröffentlichungstag der Anmeldung: 03.10.1990
(73) Patentinhaber: RSF-Elektronik Gesellschaft m.b.H., A-5121 Tarsdorf 93 (AT)
(72) Erfinder: Rieder, Heinz, A-5120 St. Pantaleon (AT); Schwaiger, Max, A-5121 Ostermiehthing (AT)
(74) Vertreter: Hübscher, Heiner, Dipl.-Ing.

(56) Entgegenhaltungen:
- EP-A- 0 088 222
- DE-A- 3 416 091

## Beschreibung

Die Erfindung betrifft ein Verfahren zur elektronischen Korrektur von Positionsfehlern bei einem inkrementalen Meßsystem, inbesondere einem inkrementalen Längenmeßsystem, gemäß dem Oberbegriff des Patentanspruches 1.

Die Erfindung betrifft auch ein inkrementales Meßsystem gemäß dem Oberbegriff des Patentanspruches 2.

Bei inkrementalen Meßsystemen, insbesondere Längenmeßsystemen, wird der entsprechend ausgebildete Inkrementalmaßstab nach optoelektronischen, kapazitiven, induktiven oder magnetischen Abtastprinzipien abgetastet, wobei der Auswertung meist zwei um 90° phasenverschobene Meßsignale zugeleitet werden, bei denen meist die Länge eines Signalzuges einem Teilungsinkrement des Maßstabes entspricht. Bei optisch oder optoelektronisch ablesbaren Inkrementalmaßstäben besteht die Meßteilung vorzugsweise aus gleich breiten Hell- und Dunkelfeldern, die über die gleiche Teilung aufweisende, gegeneinander aber um Teilungsbruchteile versetzte Abtastgitter unter Verwendung zugeordneter Beleuchtungseinrichtungen und photoelektrischer Empfänger abgetastet werden. Für die Erzeugung von zwei analogen Meßsignalen werden vorzugsweise vier, paarweise in Gegenschaltung verbundene photoelektrische Empfänger verwendet.

Aus der CH-A-407 569 ist eine Möglichkeit der elektronischen Unterteilung des Maßstabes durch eine Teilerschaltung bekannt, wobei hier eine Potentiometerschaltung verwendet wird und die Nulldurchgänge bzw. Flankenwechsel des analogen Meßsignales an den einzelnen Potentiometerabgriffen über die Triggerstufen erfaßt werden. Häufig werden Teilerschaltungen verwendet, die eine Verfünffachung der Abtastsignale ergeben, so daß an den einzelnen Triggerstufen - bezogen auf das analoge Meßsignal - alle 18° ein Rechteck-Flankenwechsel erzeugt wird. Durch logische Verknüpfung dieser Signale werden die digitalen Zählsignale erhalten, die verstellrichtungsabhängig einer Zähleinrichtung zugeführt werden. Die Verstellrichtung ergibt sich daraus, daß schon bei den analogen Meßsignalen je nach Verstellrichtung das eine oder andere Signal gegenüber dem zweiten Signal voreilt.

Aus der CH-A-650 334 ist eine andere Teilerschaltung bekannt, bei der die analogen Meßsignale mit Wechselspannungen höherer Frequenz moduliert werden, die mittels eines Systemtaktgebers und Untersetzern und Pulsformern erhalten werden, wobei über die Untersetzer ein fester Teilungsfaktor eingestellt wird und eine Umstellung auf andere Unterteilungsfaktoren durch Umschaltung des Umsetzers möglich ist. Es wird jeweils eine dem Phasenwinkel des Meßsignales und damit dem momentan abgetasteten Teilungsbruchteil der Inkrementalteilung entsprechende Anzahl von Impulsen erzeugt und in eine Zähleinrichtung eingezählt. Damit ist eine elektronische Unterteilung des Maßstabinkrementes um den festen Teilungsfaktor, beispielsweise 100, möglich.

Bei der Längen- und Winkelmessung treten Fehler auf, die ohne Korrektur das Meßergebnis besonders bei hochgenauen Messungen oder Maschinensteuerungen nachteilig beeinflussen. Positionsfehler ergeben sich vor allem durch Teilungsfehler der Meßteilung, Montagefehler eines Längenmeßsystems an einer zugeordneten Maschine und/oder auch durch Maschinenfehler selbst. Weitere (meist lineare) Meßfehler ergeben sich durch ein unterschiedliches Wärmedehnungsverhalten eines die Meßteilung aufweisenden Längenmaßstabes gegenüber einem Maschinenbett und eine nicht exakt parallele Anordnung des Maßstabes gegenüber der zugeordneten Führung einer Maschine.

Bei bekannten elektronischen Korrekturverfahren (DE-A-34 16 091) werden einfache Schaltungen verwendet, die den Zählerstand für die Anzeige- oder Steuereinrichtung bei vorgegebenen Zählerständen nach einer gespeicherten Korrekturtabelle korrigieren. Nachteilig dabei ist die jeweils sprunghafte Änderung des Zählerstandes um wenigstens einen Zählschritt am Korrekturpunkt, wobei im Extremfall am Korrekturpunkt bei Richtungsumkehr und neuerlichem Anfahren des Meßpunktes Differenzen um mehrere Zählschritte auftreten können. Wegen dieser Zählsprünge ist keine kontinuierliche Zählweise möglich, so daß für bestimmte Positionen der Abtasteinheit kein äquivalenter (durch fortlaufende Zählung erhaltener) Anzeigewert vorhanden ist. Dies könnte bei entsprechend ausgestatteten Maschinensteuerungen zu entscheidenden Betriebsstörungen führen. Es ist zwar bekannt, zur Beseitigung dieser Nachteile bereits vor dem Eingang der Zählerschaltung, etwa in der Impulsformerstufe, digitale Zählsignale zu unterdrücken oder zusätzlich einzufügen, doch treten auch hier an den Korrekturpunkten Sprünge auf, die Meßungenauigkeiten wenigstens in der Größenordnung der einem oder mehreren Zählschritten zugeordneten Teile eines Längeninkrementes hervorrufen. Selbst eine Korrektur nach gespeicherten Korrekturwerten und unter Verwendung eines Interpolationsrechners kann zu entsprechenden Ungenauigkeiten führen und setzt überdies eine entsprechende Ausstattung des Meßsystems mit einem Rechner voraus.

Da bei den bekannten elektronischen Korrekturverfahren Meß- bzw . Anzeigeungenauigkeiten in der Größenordnung von wenigstens der einem Zählschritt zugeordneten Längen- oder Winkeleinheit auftreten und vielfach große Zählsprünge in Kauf genommen werden müssen, werden bisher für genauere Messungen und genauere Korrekturen bevorzugt mechanische Korrekturverfahren und entsprechende Einrichtungen vorgesehen, bei denen dem Prinzip nach die Abtasteinheit gegenüber dem Meßfühler über Stelltriebe in Meßrichtung verstellt wird. Die Stelltriebe tasten in einem Maßstabgehäuse angebrachte, individuell einstellbare Korrekturschablonen ab und stellen die Abtasteinrichtung entsprechend dieser Abtastung gegenüber dem Meßfühler vor oder zurück. Entsprechende Korrekturverfahren und -einrichtungen sind aus der DE-C-866 403 und den US-A-3 039 032, 3 182 385, 2 336 550 und 2 985 826 bekannt. Nach der DE-C-27 24 858 wird die abtastbare Korrekturschablone aus einer entlang eines Linearmaßstabes angebrachten Gliederkette gebildet, die an den Gelenken über von außen betätigbare Exzenter einstellbar ist. Bei diesen mechanischen Korrekturverfahren ist im Gegensatz zur sprunghaften Korrektur der bekannten elektronischen Korrekturverfahren in den einzelnen Maßstabbereichen eine stetige Korrektur möglich. Die Korrekturen sind durch den möglichen Verstellweg der Abtasteinheit gegenüber dem Mitnehmer, insbesondere beim Auftreten größerer linearer Meßfehler und durch die Abstände der Einstellpunkte für die Korrekturschablone begrenzt, also nicht in jedem beliebigen Ausmaß möglich. Die mechanische Korrektur ist äußerst aufwendig, setzt ein wesentlich grösseres Gehäuse für das Meßsystem und auch eine relativ große Abtasteinheit mit den notwendigen Stelltrieben und entsprechend großer Masse voraus und kann prinzipiell nur dann eingesetzt werden, wenn das Meßsystem von Haus aus für die Durchführung solcher mechanischer Korrekturen gebaut und ausgelegt wurde. Stufenlose Korrekturen bei linearen Maßstabfehlern lassen sich bei Verwendung von Metallmaßstäben durch Dehnen oder Stauchen des Maßstabkörpers erzielen, doch ergibt sich auch hier ein beträchtlicher Aufwand und eine wesentliche Einschränkung bei der Konstruktionsfreiheit für die Erstellung des Meßsystems.

Aufgabe der Erfindung ist es, ein Verfahren zur elektronischen Korrektur von Positionsfehlern anzugeben, nach dem mit einfachen Mitteln ohne Veränderung des Maßstabes und der Abtasteinheit Korrekturen vorgenommen werden können, ohne daß an den Korrekturpunkten Zählsprünge oder äquivalente Meßfehler auftreten, wobei die Einhaltung einer nahezu stufenlosen Korrekturkurve ermöglicht werden soll, der Korrekturbereich nicht begrenzt ist und die Korrekturen im Bedarfsfall frei programmiert werden können. Eine Teilaufgabe der Erfindung besteht darin, ein inkrementales Meßsystem nach dem Oberbegriff des Anspruches 2 zu schaffen, das für die Durchführung von Korrekturen nach dem neuen Verfahren geeignet ist.

Die gestellte Hauptaufgabe wird durch die im Anspruch 1 angegebenen Merkmale bzw. Verfahrensschritte gelöst. Das Wesen der Erfindung besteht darin, daß auf elektronischem Wege Korrekturschritte erfolgen, deren Größe nur einen Bruchteil eines Zählschrittes ausmacht, so daß die eingangs aufgezeigten Nachteile voll vermieden werden. Grundsätzlich kann das erfindungsgemäße Verfahren sowohl bei mit Teilerschaltungen als bei mit anderen Teilerstufen, z. B. mit Teilerstufen nach der CH-A-650 334 ausgestatteten Meßsystemen verwirklicht werden. Im letzteren Fall kann man für die Bestimmung der Korrekturschritte einen höheren Teilungsfaktor wählen als er an sich von Haus aus für die Erzeugung der Zählimpulse notwendig ist. Die Korrekturen werden so vorgenommen, daß am Korrekturpunkt ein Zählschritt ausgelöst wird, wenn an sich die Korrekturbedingung gegeben ist, wobei der Zählschritt für die Korrektur dem normalen Zählschritt plus oder minus dem Korrekturschritt entspricht.

Die gestellte Teilaufgabe wird durch ein Meßsystem nach dem Patentanspruch 2 gelöst.

Dabei kann die der Fehlerkorrektur dienende Einrichtung an Stelle der ohnehin meist extern vorgesehenen einzigen Teilerschaltung angebracht werden, wobei die Ausgangssignale ebenso wie jene einer einzigen Teilerschaltung weiterverarbeitet werden. Der beim Umschalten von einer Teilerschaltung auf die nächste auftretende Korrekturschritt entspricht wieder dem durch die Anzahl der Teilerschaltungen gegebenen Bruchteil eines Zählschrittes und kann vernachlässigbar klein gehalten werden. Da der Unterteilungsfaktor in den Teilerschaltungen untereinander gleich bleibt, ergeben sich an den Abgriffpunkten einer Teilerschaltung hinreichend große Phasenabstände zum nächsten Abgriffpunkt und die Auswertungseinrichtung braucht nicht verändert zu werden. Die elektronisch erzielbare feinfühlige Korrektur in nur Bruchteile eines Zählschrittes ausmachenden Stufen ist in dieser Hinsicht mit der bekannten mechanischen Korrektur vergleichbar, hat aber dieser gegenüber den Vorteil, daß die Korrekturkurve, die nach dem erfindungsgemäßen Verfahren bzw. im konkreten Fall durch Umschaltung auf die verschiedenen Teilerschaltungen eingehalten werden kann, im Bedarfsfall durch entsprechende Programmierung der Schaltung des Wählschalters an jede Fehlerkurve angepaßt werden kann.

Bei einer Ausbildung des Längemeßsystems nach Anspruch 3 können Analogschalter Verwendung finden, die die meist aus Widerstandketten bestehenden Teilerschaltungen auswählen und anschalten, wobei mit gemeinsamen Trigger- und Impulsformerstufen das Auslangen gefunden wird.

Es gibt auch integrierte Schaltkreise, bei denen die Trigger- und Impulsformerstufen kleine und leicht integrierbare Bausteine bilden, wobei es sogar möglich ist, die Triggerstufen mit je einer Teilerschaltung zu kombinieren. Bei solchen Bausteinen ist eine Ausbildung gemäß Anspruch 4 vorteilhaft, wobei hier auch bei hohen Zählgeschwindigkeiten exakte Umschaltungen möglich sind und bei Verwendung mehrerer Teilerketten die Anzahl der über den Schalter herzustellenden Schaltverbindungen verringert wird.

Bei der Verwirklichung des Erfindungsgegenstandes wird man eine Anpassung an die jeweils verwendeten Trigger- und Impulsformsterstufen bzw. die nachgeordneten Auswertungsstufen vornehmen, um Steuerungs- oder Anzeigefehler zu vermeiden. Die Auswertungseinheiten können dabei Vor-Rückwärtszähler, Zähleinrichtungen mit freilaufenden Zählern für die beiden Verstellrichtungen, deren jeweiliger Stand über eine Mikrocomputer erfaßt und mit vorher festgehaltenen Speicherwerten verknüpft wird, und ähnliche Schaltungen umfassen. Zur Vermeidung von Fehlimpulsen kann man gemäß Anspruch 5 vorgehen, so daß der Schalter nur bei dem vorgegebenen Pegel nach dem Umschaltbefehl auf die folgende Teilerschaltung umschaltet. Eine zusätzliche Möglichkeit ist in Anspruch 6 angegeben.

Vor allem für den Ausgleich linearer Meßfehler kann man eine Schaltung nach Anspruch 7 einsetzen, wobei bei mehreren Teilerschaltungen auch vorgegeben wird, in welcher Richtung die Umsteuerung erfolgt, d. h. welche der beiden benachbarten Teilerketten angeschaltet wird. Durch von der Lage der Abtasteinheit am Maßstab abhängige Änderung der Zählereinstellung des Steuerzählers kann man eine Annäherung an beliebige Korrekturkurven in linearen Abschnitten erzielen. Anspruch 8 gibt eine Möglichkeit zur Korrektur des Temperaturfehlers an. Nach Anspruch 9 können beliebige Korrekturen vorgenommen werden, wobei der Korrekturspeicher entweder bei der Herstellung mit festen Speicherwerten programmiert wird, aber auch über eine Eingabeeinrichtung frei programmierbar sein kann.

Weitere Einzelheiten und Vorteile des Erfindungsgegenstandes entnimmt man der nach folgenden Zeichnungsbeschreibung.

In der Zeichnung ist als Ausführungsbeispiel ein inkrementales Längenmeßsystem veranschaulicht. Es zeigen
- Fig. 1: in stark vereinfachter Darstellungsweise ein Blockschaltschema eines Längenmeßsystems,
- Fig. 2: zur näheren Erläuterung der Funktionsweise eine Korrektureinrichtung mit zwei Teilerschaltungen, einem zugeordneten Umschalter, den Trigger- und Impulsformerstufen und einer Steuereinrichtung für den Umschalter,
- Fig. 3: in einem Diagramm die Ableitung der digitalen Zählsignale aus den analogen Meßsignalen unter Verwendung der beiden Teilerschaltungen und
- Fig. 4: in der Fig. 1 entsprechender Darstellungsweise ein Blockschaltschema einer Ausführungsvariante.

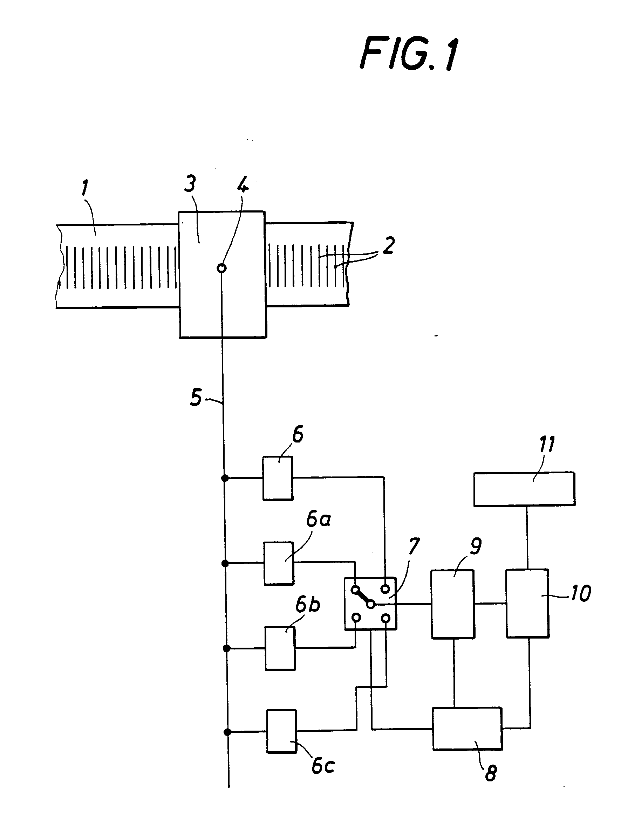

Nach Fig. 1 besitzt ein vorzugsweise in einem Gehäuse gekapselter Maßstab 1 eine aus Hell-Dunkelfeldern bestehende Meßteilung 2. Entlang des Maßstabes 1 ist über einen Mitnehmer eine Abtasteinheit 3 verstellbar, die durch den Maßstab und gegeneinander um Teilungsbruchteile versetzte Abtastgitter beleuchtete photoelektrische Empfänger aufweist, an deren Ausgängen in ihrer Grundform sinusförmige, gegeneinander phasenverschobene analoge Meßsignale auftreten, wobei im Normalfall am Ausgang 4 zwei um 90° gegeneinander phasenverschobene sinusförmige Meßsignale auftreten, die über nur einpolig dargestellte Leitungen 5 der weiteren Verarbeitung zugeführt werden.

An die Leitungen 5 sind in Parallelschaltung zwei oder mehrere Teilerschaltungen 6, 6a, 6b, 6c angeschlossen. Dabei entspricht die Anzahl n der verwendeten Teilerschaltungen dem Nenner jenes Bruches, der die Größe des Korrekturschrittes im Verhältnis zu einem Zählschritt angibt.

Jede der Teilerschaltungen 6 bis 6c kann über einen elektronischen Umschalter 7, der von einer Steuerlogik 8 gesteuert wird, an eine nachgeordnete Trigger- und Impulsformerstufe 9 angeschaltet werden, wo die aus der jeweils angeschalteten Teilerschaltung 6 bis 6c bei der Verstellung der Abtasteinheit 3 abgetasteten Signale die an der Teilerschaltung entsprechende Triggerpegel ergeben, unter elektronischer Unterteilung der Maßstabteilung in elektronische Zählsignale ausgewertet werden, die einer Verarbeitungseinheit, beispielsweise einer Zähleinrichtung 10 mit nachgeordneter Anzeigeeinrichtung 11 zugeführt werden. Die Teilerschaltungen 6 bis 6c haben untereinander gleiche Teilungsfaktoren, sind aber bezüglich den analogen Meßsignalen hinsichtlich ihrer Triggerpegel um Bruchteile des Teilungsschrittes versetzt, so daß durch Umschaltung des Schalters 7 Korrekturen um diesen Korrekturschritt vorgenommen werden können. Über die Schaltlogik 8 wird hier die Umschaltrichtung des Schalters 7 bestimmt. Ferner kann vorgesehen werden, daß zumindest bei der einen Umschaltrichtung des Schalters die Umschaltung grundsätzlich unmittelbar nach Abgriff des letzten Zählschrittes aus der bisher angeschalteten Teilerschaltung erfolgt, wobei der erste von der neu angeschalteten Teilerschaltung erhaltene Triggerpegel unterdrückt wird, wenn eine sinngemäße Verringerung der Zählschritte durch mehrere Korrekturen erzielt werden soll. Bei dieser Umschaltrichtung würde dann nach einem vollständigen Umlauf des Schalters 7 in der gleichen Richtung über vier Korrekturschritte die Gesamtanzeige um einen Zählschritt weniger anzeigen. Bei umgekehrter Schaltrichtung des Schalters 7 würde über vier Umschaltungen des Schalters 7, wobei die Teilerstufen 6 bis 6c nacheinander angeschaltet werden, ein Zählschritt mehr auftreten als dann, wenn bei Abtastung der gleichen Maßstabstrecke die Stellung des Schalters 7 unverändert bleibt.

Die Schaltlogik 8 des Schalters 7 kann von einem Speicher und von der Steuereinheit 10 gesteuert werden, so daß durch gezielte Umschaltung in den beiden Verstellrichtungen jede gewünschte Korrekturkurve realisiert werden kann.

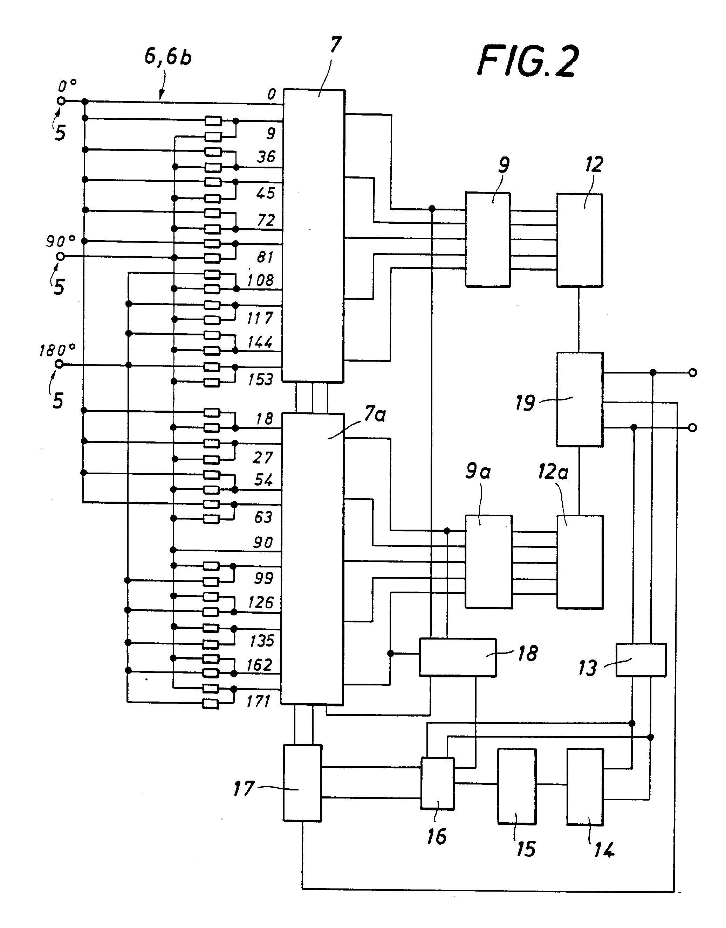

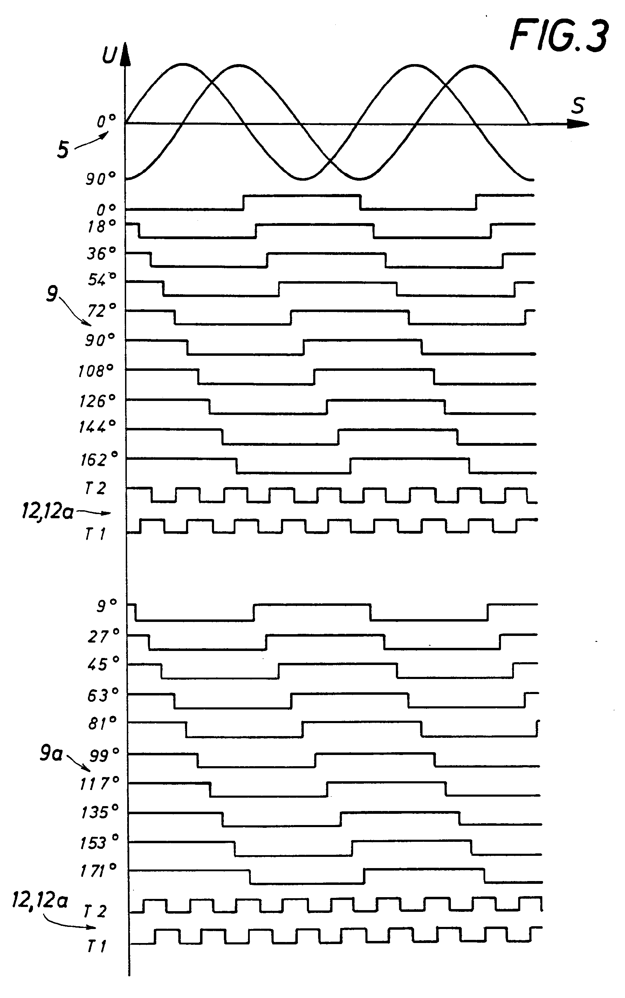

Nach Erläuterung des Korrekturprinzips im Zusammenhang mit der Fig. 1 wird nun eine Ausführungsform mit nur zwei Teilerstufen im Zusammenhang mit den Fig. 2 und 3 näher erläutert. Mit dieser Schaltung wird unter Verwendung von Teilerketten 6, 6b ein Korrekturschritt in der Größe eines halben Zählschrittes ermöglicht. Die Teilerstufen 6, 6b sind als Widerstandsteilerketten ausgebildet, wobei die Teilerstufe 6 Triggerpunkte 0/18/36/54/72/90/108/126/144/162 el. Grad und die Teilerkette 6b Triggerpunkte 9/27/45/63/81/99/117/135/153/171 el. Grad bestimmt. Der elektronische Umschalter 7, 7a legt jeweils die eine Teilerkette 6 oder 6b an Triggerstufen 9, 9a, denen je eine Verknüpfungslogik mit Impulsformerstufe 12, 12a (hier gegenüber der Ausführung nach Fig. 1 gesondert gezeichnet) zugeordnet ist. Wird der Analogschalter 7, 7a von der Teilerkette 6 auf die Teilerkette 6b umgestellt, so bedeutet dies, daß, wenn beim Umschaltpunkt 0 el. Grad von 6 auf 6b umgeschaltet wird, der nächste Triggerpunkt nicht bei 18 el. Grad, sondern bei 9 el. Grad, oder wenn durch die Schaltlogik dieser Triggerpunkt unterdrückt wird, bei 27 el. Grad liegt, also ein Korrekturschritt um einen halben Zählschritt ausgeführt wird.

Die Steuerlogik besitzt eine über eine Umschaltlogik 19 mit den Impulsformerstrufen 12, 12a verbundene, an sich bekannte Impulsvervierfacherschaltung mit Richtungsdiskriminator 13, von dem aus die richtungsabhängigen Zählimpulse einem Vor-Rückwärtszähler 14 zugeführt werden. Im einfachsten Fall bei linearer Korrektur handelt es sich beim Zähler 14 um einen Zähler mit einstellbarem Teilverhältnis. Bei nicht linearer Korrektur ist eine Decoderstufe mit Speicher 15 erforderlich, die entweder über eine hier nicht dargestellte Eingabeeinheit programmiert werden kann oder mit einem vorprogrammierten Festwertspeicher bestückt ist. Die Zähler-Codiereinheit 14, 15 kann auch durch einen Rechner mit Festwertspeicher gebildet werden, in den über eine Eingabeeinheit oder externe Schnittstellen Korrekturpunkte eingegeben werden können. Das am Ausgang der Stufe 14, 15 gewonnene Signal zur Auslösung eines Korrekturschrittes wird in einer Synchronisierstufe 16 so aufbereitet, daß am gewünschten Schaltpunkt (vorzugsweise bei 0 bzw. 9 el. Grad) ein richtungsabhängiger Zählimpuls an einen einen Teil der Schaltlogik 8 bildenden Adresszähler 17 zur Weiterschaltung der Teilerketten über die Analogschalter 7, 7a abgegeben wird.

Um Fehlimpulse zu vermeiden, wird man jeden Korrekturschritt einem bestimmten Punkt der periodischen analogen Meßsignale zuordnen und den Korrekturschritt vorzugsweise bei 0 el. Grad vornehmen. Diese Synchronisierung erfolgt in der Synchronisierstufe 16, die einen Zählschritt für den Adresszähler 17 nur dann auslöst, wenn die genannte Bedingung erfüllt ist. Eine Freigabelogik 18 bewirkt, daß am Umschaltpunkt bei 0 bzw. 9 el. Grad die eigene Teilerstufe 6 bzw. 6b erst dann geschaltet wird, wenn der Triggerpunkt der benachbarten Stufe erreicht ist. Es wird dadurch zu diesem Zeitpunkt eine neuerliche Umschaltung über den Triggerausgang und die Erzeugung eines Fehlimpulses vermieden.

Die schon erwähnte Umschaltlogik 19 hat den Zweck, mit einfachen Mitteln aufeinanderfolgende gleichsinnige Korrekturen zu ermöglichen, also nach Vornahme von einem vollen Zählschritt entsprechenden Korrekturschritten, die Weiterverarbeitung der Signale störungsfrei zu gewährleisten. Theoretisch könnten zur Lösung dieser Aufgabe die Analogschalter 7, 7a jeweils nach Erreichen einer Korrektur um einen ganzen Zählschritt um eine volle Stufe weiterschalten, also z. B. den bisher mit dem Triggerpunkt 0 bzw. 9 verbundenen Schalterteil auf den Triggerpunkt 36, 45 umschalten usw. Über die Umschaltlogik 19 läßt sich die gleiche Aufgabe mit einfacheren Mitteln in dem digitalen Teil der Schaltung lösen. Die Umschaltlogik 19 wird zu diesem Zweck vom Adresszähler 17 gesteuert und wechselt entsprechend den Steuersignalen die Verbindung der Impulsformerstufen 12, 12a mit den zur weiteren Verarbeitung führenden Ausgängen.

In Fig. 3 sind zur Verdeutlichung der Wirkungsweise der erfindungsgemäßen Schaltung die an den Leitungen 5 auftretenden Analogsignale und die Ableitung der Zählsignale T1, T2, T1', T2', aus dem Abgriff der Teilerketten bei Anschaltung der beiden Teilerketten 6 bzw. 6b veranschaulicht.

Eine Vereinfachung der Schaltung wäre zumindest theoretisch dann möglich, wenn über die Abtasteinheit 3 oder eine der Abtasteinheit nachgeordnete Umformerstufe für die analogen Meßsignale genau dreieckförmige Analogsignale erhalten werden. Hier könnte mit nur einer Teilerkette gearbeitet werden, bei der zur Phasenverschiebung der Teilerpunkte Widerstände über den Schalter 7 vor- bzw. nachgeschaltet werden.

Besonders, wenn die Schaltung 14, 15 aus einem Rechner gebildet wird, kann man zum Ausgleich äußerer Parameter und eines dadurch bedingten linearen Fehlers, z. B. des Wärmedehnungsfehlers Temperaturfühler vorsehen, die entsprechende Korrekturen durch periodische Umschaltung des Schalters 7, 7a bewirken.

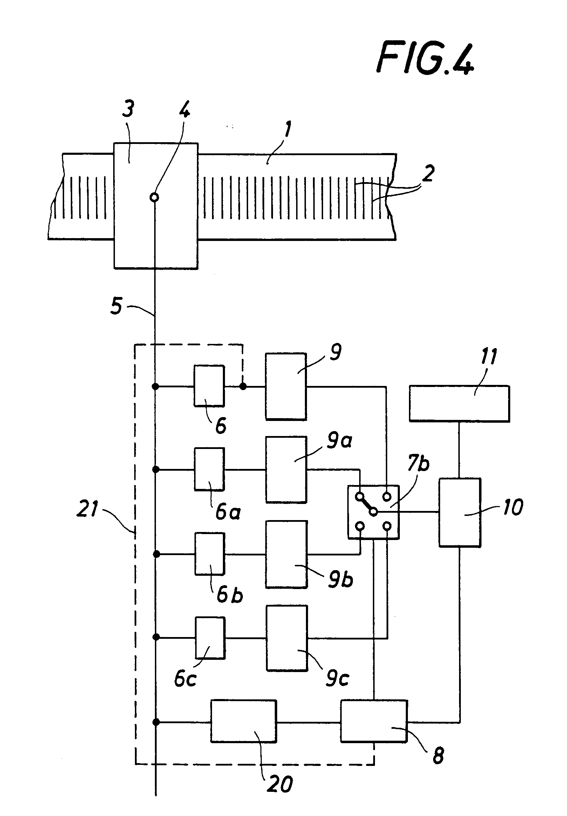

Die Ausführung nach Fig. 4 unterscheidet sich von der Ausbildung nach Fig. 1 dadurch, daß jeder Teilerschaltung 6 bis 6c auch eine Trigger- und Impulsformerstufe 9 bis 9c zugeordnet ist, an deren Ausgang an sich bereits digitale Zählsignale auftreten, die aber wieder bezüglich des Grundsignales um Zählschrittbruchteile versetzt sind. Der Wählschalter 7b wird wieder von der Steuerlogik 8 gesteuert und ist entweder über eine eigene, an der Leitung 5 liegende Synchronisierstufe 20 oder, wie strichpunktiert über die Leitung 21 angedeutet, durch Verbindung mit dem Ausgang der einen Teilerkette auf die analogen Meßsignale synchronisiert.

Die erfindungsgemäße Korrektureinrichtung ist zwar vorwiegend für Längenmeßsysteme bestimmt, kann aber sogar bei Winkelmeßsystemen oder Drehmeldern eingesetzt werden, bei denen bisher eine feinstufige mechanische Korrektur überhaupt unmöglich war und Korrekturen im Bedarfsfall nur durch Hinzufügen oder Unterdrücken von Zählschritten vorgenommen wurden.

## Patentansprüche

1. Verfahren zur elektronischen Korrektur von Positionsfehlern bei einem inkrementalen Meßsystem, insbesondere einem inkrementalen Längenmeßsystem, bei dem durch Abtastung einer Meßteilung (2) mit einer Abtasteinheit (3) periodische, in ihrer Grundform sinusförmige, analoge Meßsignale erzeugt und aus ihnen in einer Teilerstufe (6) unter elektronischer Unterteilung des Maßstabes verstellrichtungsabhängige, digitale Zählsignale (T₁, T₂) für eine Auswertungseinrichtung (10, 11) abgeleitet werden, wobei jedes Zählsignal einer bestimmten Phasenlage der Meßsignale zugeordnet ist, dadurch gekennzeichnet, daß für die Fehlerkorrektur zwischen den den Zählsignalen (T₁, T₂) zugeordneten, im Phasenabstand der Unterteilungsstellen liegenden Signalpegeln weitere, um definierte Bruchteile des Teilungsschrittes versetzte Signalpegel bestimmt und die Auswertung der Messung nach einem Korrekturprogramm wahlweise auf die versetzten Signalpegel bezogen wird, so daß Korrekturen in nur Bruchteilen des Teilungsschrittes entsprechenden Korrekturschritten vorgenommen werden.

2. Inkrementales Meßsystem, bei dem durch Abtastung einer Meßteilung (2) mit einer Abtasteinheit (3) erzeugte, periodische, in ihrer Grundform sinusförmige analoge Meßsignale einer Teilerschaltung (6) zugeführt und aus ihnen über Trigger- und Impulsformerstufen (9, 12) unter elektronischer Unterteilung der Meßteilung (2) des Maßstabes (1) verstellrichtungsabhängige, digitale Zählsignale (T₁, T₂) für eine Auswertungseinrichtung (10, 11), z. B. eine Anzeige- oder Steuereinrichtung abgeleitet werden, wobei elektronische Einrichtungen zur Fehlerkorrektur vorgesehen sind, dadurch gekennzeichnet, daß für die Fehlerkorrektur zwei oder mehrere Teilerschaltungen (6 bis 6c) mit untereinander gleichem Unterteilungsfaktor, aber gegeneinander bezüglich der analogen Meßsignale um Bruchteile des Teilungsschrittes phasenverschobener Lage der Triggerpegel vorgesehen und jeweils eine von ihnen über einen nach einem Korrekturprogramm gesteuerten, elektronischen Wählschalter (7, 7a, 7b) an die Auswertungseinrichtung (10) anschaltbar ist.

3. Längenmeßsystem nach Anspruch 2, dadurch gekennzeichnet, daß der Wählschalter (7, 7a) zwischen den Teilerschaltungen (6 bis 6c) und der Auswertungseinrichtung (10) zugeordneten, gemeinsamen Trigger- und Impulsformerstufen (9, 12) vorgesehen ist.

4. Längenmeßsystem nach Anspruch 2, dadurch gekennzeichnet, daß jeder Teilerschaltung (6 bis 6c) eine eigene Trigger- und/oder Impulsformerstufe (9 bis 9c) zugeordnet und der Wählschalter (7b) als diesen nachgeordneter, digitaler Umschalter ausgebildet ist.

5. Längenmeßsystem nach einem der Ansprüche 2 bis 4, dadurch gekennzeichnet, daß der Wählschalter (7, 7a, 7b) auf einen vorgegebenen Pegel wenigstens des einen analogen Meßsignales, vorzugsweise auf dessen Nulldurchgang synchronisiert ist.

6. Längenmeßsystem nach einem der Ansprüche 2 bis 5, dadurch gekennzeichnet, daß für den Wählschalter (7, 7a, 7b) eine Steuerlogik (8; 14 bis 19; 20) vorgesehen ist, die eine Umschaltung des Wählschalters erst nach Abgriff eines Zählsignales aus der momentan angeschalteten Teilerschaltung (6 bis (6 bis 6c) zuläßt.

7. Längenmeßsystem nach einem der Ansprüche 2 bis 6, dadurch gekennzeichnet, daß für die Steuerung des elektronischen Wählschalters (7, 7a) eine mit den Zählsignalen beaufschlagte einstellbare Zähleinrichtung (14, 15) dient, die jeweils beim Erreichen des eingestellten Zählerstandes einen Umsteuerbefehl für den Wählschalter (7, 7a) erzeugt.

8. Längenmeßsystem nach Anspruch 7, dadurch gekennzeichnet, daß die Zähleinrichtung (14, 15) abhängig von der über einen Temperaturwächter erfaßten Umgebungstemperatur einstellbar ist.

9. Längenmeßsystem nach einem der Ansprüche 2 bis 8, dadurch gekennzeichnet, daß ein entsprechend der Stellung der Abtasteinheit (3) am Maßstab (1) abfragbare Adressen aufweisender Korrekturspeicher (15) zur Steuerung des Wählschalters (7, 7a, 7b) vorgesehen ist.

## Claims

1. A method of electronic correction of position errors in an incremental measuring system, more particularly an incremental length-measuring system, in which periodic, basically sinusoidal analog measuring signals are generating by scanning a measuring graduation (2) by means of a scanning unit (3) and are used in a divider stage (6), with electronic subdivision of the scale, to derive digital counting signals (T₁, T₂), dependent on the direction of adjustment, for an evaluating device (10, 11), each counting signal being associated with a particular phase position of the measuring signals, characterised in that for the purpose of error correction, additional signal levels offset by defined fractions of the graduation step are determined between the signal levels associated with the counting signals (T₁, T₂) and spaced apart in phase with the subdivision places, and the evaluation of the measurement is optionally related to the offset signal levels in accordance with a corrective program, so that corrections can be made in steps corresponding just to fractions of the graduation step.

2. An incremental measuring system in which periodic, basically sinusoidal analog measuring signals generated by scanning a measuring graduation (2) by means of a scanning unit (3) are supplied to a divider circuit (6) and used via trigger and pulse-shaping stages (9, 12) with electronic subdivision of the measuring graduation (2) of the scale (1) to derive digital counting signals (T₁, T₂), dependent on the direction of adjustment, for an evaluating circuit (10, 11), e.g. a display or control circuit, electronic error correction means being provided, characterised in that for the purpose of error correction, two or more divider circuits (6 - 6c) are provided with the same subdivision factor but with trigger level positions which are phase-shifted from one another by fractions of the graduation step relative to the analog measuring signal, and each circuit can be connected to the evaluating circuit (10) via an electronic selector switch (7, 7a, 7b) controlled in accordance with a correction program.

3. A length-measuring system according to claim 2, characterised in that the selector switch (7, 7a) is provided between the divider circuits (6 - 6c) and the common trigger and pulse-shaping stages (9, 12) associated with the evaluating circuit (10).

4. A length-measuring system according to claim 2, characterised in that each divider circuit (6 - 6c) is associated with a separate trigger and/or pulse-shaping stage (9 - 9c) and the selector switch (7b) is a digital change-over switch downstream of the pulse-shaping stages.

5. A length-measuring system according to any of claims 2 to 4, characterised in that the selector switch (7, 7a, 7b) is synchronised with a preset level of at least one analog measuring signal, preferably with the passage thereof through zero.

6. A length-measuring system according to any of claims 2 to 5, characterised in that the selector switch (7, 7a, 7b) is provided with a control logic (8; 14 to 19; 20) which does not allow the selector switch to change over until a counting signal has been tapped from the instantaneously connected divider circuit (6 to 6c).

7. A length-measuring system according to any of claims 2 to 6, characterised in that the electronic selector switch (7, 7a) is controlled by an adjustable counter (14, 15) which is supplied with the counting signals and which generates a change-over command for the selector switch (7, 7a) whenever the set counter level is reached.

8. A length-measuring system according to claim 7, characterised in that the counter (14, 15) is adjustable in dependence on the ambient temperature detected by a temperature monitor.

9. A length-measuring system according to any of claims 2 to 8, characterised in that a correction memory (15) for controlling the selector switch (7, 7a, 7b) is provided and contains addresses which can be interrogated in dependence on the position of the scanning unit (3) on the scale (1).

## Revendications

1. Procédé de correction électronique d'erreurs de position dans un système de mesure incrémental, en particulier un système de mesure de longueur incrémental, dans lequel, par exploration d'une graduation de mesure (2) à l'aide d'une unité d'exploration (3), des signaux de mesure analogiques, périodiques, à forme de base sinusoïdale sont produits et dans lequel, à partir de ceux-ci, des signaux de comptage numériques (T₁, T₂) destinés à un dispositif d'exploitation (10, 11), dépendant du sens de réglage, sont dérivés, en vue d'obtenir une subdivision électronique de l'échelle graduée, chaque signal de comptage étant associé à une position de phase déterminée des signaux de mesure, caractérisé en ce que l'on détermine pour la correction d'erreurs, entre les niveaux de signaux présentant un décalage de phase par rapport aux endroits de subdivision et associés aux signaux de comptage (T₁, T₂), d'autres niveaux de signaux, décalés de la valeur de fractions définies du pas de division, et l'exploitation de la mesure effectuée suivant un programme de correction se référant à volonté aux niveaux de signaux décalés, de sorte que les corrections ne soient effectuées que dans des étapes de correction correspondant à des fractions du pas de la division.

2. Système de mesure incrémental, dans lequel, par exploration d'une graduation de mesure (2), des signaux de mesure analogiques, à forme de base sinusoïdale, périodiques, produits à l'aide d'une unité d'exploration (3), sont amenés à un circuit diviseur (6) et, à partir d'eux, des signaux de comptage (T₁, T₂) numériques, dépendant du sens de déplacement de réglage, destinés à un dispositif d'exploitation (10, 11), par exemple un dispositif d'affichage ou de commande, sont dérivés par l'intermédiaire d'étages de déclenchement et de formation d'impulsion (9, 12), en opérant une subdivision électronique de la graduation de mesure (2), des dispositifs électroniques étant prévus pour la correction des erreurs,
caractérisé en ce que sont prévus pour la correction des erreurs deux ou plusieurs circuits diviseurs (6 à 6c), ayant chacun des facteurs de division égaux, mais avec des positions en phase des niveaux de déclenchement décalées les unes par rapport aux autres, de la valeur de fractions du pas de division, par rapport aux signaux de mesure analogiques et un interrupteur de sélection électronique (7, 7a, 7b), commandé suivant un programme de correction, étant chaque fois susceptible d'être mis en circuit avec le dispositif d'exploitation (10).

3. Système de mesure incrémental selon la revendication 2,
caractérisé en ce que l'interrupteur de sélection (7, 7a) est prévu entre les circuits diviseurs (6 à 6c) et les étages de déclenchement et de formation d'impulsion (9, 12) communs, associés au dispositif d'exploitation (10)

4. Système de mesure incrémental selon la revendication 2,
caractérisé en ce qu'à chaque circuit diviseur (6 à 6c) est associé un étage de déclenchement et/ou de formation d'impulsion (9 à 9c) propre et l'interrupteur de sélection (7b) étant réalisé sous forme de commutateur numérique, mis en circuit en aval de ceux-ci.

5. Système de mesure incrémental selon l'une des revendications 2 à 4,
caractérisé en ce que l'interrupteur de sélection (7, 7a, 7b) est synchronisé à un niveau prédéterminé d'au moins un signal de mesure analogique, de préférence à l'occasion de son passage à zéro.

6. Système de mesure incrémental selon l'une des revendications 2 à 5,
caractérisé en ce que pour l'interrupteur de sélection (7, 7a, 7b) est prévue une logique de commande (8; 14 à 19; 20), autorisant une commutation de l'interrupteur de sélection après prélèvement d'un signal de comptage dans le circuit diviseur (6 à 6c) raccordé momentanément.

7. Système de mesure incrémental selon l'une des revendications 2 à 6,
caractérisé en ce que pour la commande de l'interrupteur de sélection (7, 7a) est utilisé un dispositif de comptage (14, 15) réglable, alimenté avec les signaux de comptage, produisant un ordre de commutation pour l'interrupteur de sélection (7, 7a) chaque fois que l'état de compteur réglé est atteint.

8. Système de mesure incrémental selon la revendication 7,
caractérisé en ce que le dispositif de comptage (14, 15) est réglable en fonction de la température ambiante, appréhendée par un organe de surveillance de température.

9. Système de mesure incrémental selon l'une des revendications 2 à 8,
caractérisé en ce qu'est prévu une mémoire de correction (15), présentant des adresses interrogeables en fonction de la position de l'unité d'exploration (3) sur la règle graduée (1), en vue d'assurer la commande de l'interrupteur de sélection (7, 7a, 7b).
